# EUROPÄISCHE PATENTSCHRIFT

(11) **EP 2 389 566 B1**
(45) Veröffentlichungstag und Bekanntmachung des Hinweises auf die Patenterteilung: **16.11.2016**
(21) Anmeldenummer: 10709951.7
(22) Anmeldetag: 21.01.2010
(51) Int. Cl.: G01F 25/00, G01P 1/02, G01P 5/26, G01F 1/66, G01F 15/18

(54) **VERFAHREN ZUR MESSUNG EINER STRÖMUNG, EINBAUEINHEIT UND MESSVORRICHTUNG**
METHOD FOR MEASURING A FLOW, INSTALLATION UNIT AND MEASURING APPARATUS
PROCÉDÉ POUR MESURER UN FLUX, UNITÉ INTÉGRÉE ET DISPOSITIF DE MESURE

(30) Priorität: 22.01.2009 DE 102009005800
(43) Veröffentlichungstag der Anmeldung: 30.11.2011
(73) Patentinhaber: Dues, Michael, 50126 Bergheim (DE); Müller, Dr., Ulrich, 4107 Ettingen (CH); Kallweit, Dr., Stephan, 52074 Aachen (DE)
(72) Erfinder: Dues, Michael, 50126 Bergheim (DE); Müller, Dr., Ulrich, 4107 Ettingen (CH); Kallweit, Dr., Stephan, 52074 Aachen (DE)
(74) Vertreter: Castell, Klaus
(86) Internationale Anmeldenummer: PCT/DE2010/000055
(87) Internationale Veröffentlichungsnummer: WO 2010/083812

(56) Entgegenhaltungen:
- WO-A1-2005/022170
- GB-A- 2 450 182
- US-A- 4 099 870
- US-A- 5 131 741
- US-A- 5 396 814
- US-A- 5 842 496
- US-B1- 6 647 804

## Beschreibung

Die Erfindung betrifft eine Einsetzvorrichtung zur Herstellung der optischen Zugänglichkeit zu einer Strömungsanlage für die Messung der Strömungsgeschwindigkeit des Förderstromes und des Strömungsgeschwindigkeitsfeldes von Fluiden in der Strömungsanlage mittels optischer Messverfahren, ein Verfahren zur Herstellung der optischen Zugänglichkeit zu einer Strömungsanlage für die Messung der Strömungsgeschwindigkeit des Förderstromes und des Strömungsgeschwindigkeitsfeldes von Fluiden in der Strömungsanlage mittels optischer Messverfahren und eine Strömungsanlage.

Bei älteren Messmethoden des Volumenstromes von Fluiden wurden durch die Messung selbst die Strömungsbedingungen beeinflusst. Hierzu zählen Vorrichtungen mit Normblenden, Staudruck- und Venturidüsen, sowie Turbinenrad- und Hitzdrahtanemometer.

Modernere Messmethoden wie das Ultraschallverfahren nach dem Laufzeit- oder Dopplerprinzip und das weit verbreitete magnetisch-induktive Durchflussmessverfahren (MID) beeinflussen zwar nicht mehr die Strömung, die Messgenauigkeit hängt aber von den Strömungsverhältnissen ab. Weichen diese am Einbauort der Messeinrichtung von den idealen rotationssymmetrischen sowie wirbel- und drallfreien Geschwindigkeitsverteilungen ab, die auf den Herstellerprüfständen zur Gerätekalibrierung vorgefunden werden, verschlechtert sich die Messgenauigkeit der Geräte oft in starker und unbekannter Weise. Derartig unterschiedliche Strömungsverhältnisse können beispielsweise durch Unterschreitung der in den Herstellervorschriften geforderten minimalen Vor- und Nachlaufstrecken der Geräte nach Anlageneinbauten wie Ventilen und Absperrklappen vor dem Messgerät hervorgerufen werden. Die geforderten Vorlaufstrecken und Strömungsbedingungen sind hierbei in der Praxis insbesondere bei Großanlagen, größeren Rohrdimensionen und nachträglichen Einbauten nicht oder nur mit erheblichem Kostenaufwand zu erfüllen, so dass als wesentlicher Nachteil bisheriger Volumen- bzw. Volumenstrom-Messverfahren ein Nachweis der Messgenauigkeit durch Kalibrierung in der Anlage vor Ort unter Berücksichtigung nicht idealer, asymmetrischer sowie wirbel- und drallbehafteter Strömungen am Messort nicht möglich ist. Darüber hinaus wurden zeitliche Veränderungen derartiger Strömungsbedingungen bei bisherigen Messverfahren nicht berücksichtigt.

In der DE 199 48 827 ist zwar ein Verfahren beschrieben, das Strömungsmessverfahren wie die Laser-Doppler-Velozimetrie (LDV) oder die Partikel-Image-Velozimetrie (PIV) auch ohne optischen Zugang zur Strömungsanlage zulässt. Voraussetzung für dieses Verfahren ist jedoch der kostenintensive, gefährliche und durch Strahlenschutzbestimmungen aufwändige Einsatz von undurchsichtige Materie durchdringender Strahlung wie Röntgenstrahlung anstatt von Lichtstrahlen. Handelsübliche und damit kostengünstige optische Strömungsmess-Systeme und -Verfahren scheiden hierbei somit aus.

In der US 4 631 967 ist eine Vorrichtung beschrieben, mit der mittels einer Kolbenstange durch ein Ventil wie einem Kugelhahn hindurch Messsensoren wie Thermometer, Manometer, Flügelanemometer oder Dopplersensoren in das Rohr einer Strömungsanlage hineingeschoben werden können. Die jeweilige Messung erfolgt also bei hineingeschobener Kolbenstange, wobei die Strömung am Ort der Messung in dem Rohr, also die lokalen Strömungsgeschwindigkeiten sowie der lokale Turbulenzgrad durch die Messung selbst verändert werden. Eine genaue Messung des Strömungsprofils im Rohr z.B. zur Kalibrierung eines magnetisch-induktiven Durchflussmessgerätes vor Ort ist mit der vorgestellten Vorrichtung somit nicht möglich. Ein Vorrichtungsteil, das etwa bei nicht vollständig hinein geschobenen Sensoren eine Beeinflussung der Strömung verhindern würde, wie etwa ein der Rohrkontur angepasstes Einschubfenster, ist in der vorgestellten Vorrichtung nicht beschrieben.

Auch bei der in der US 2003/0145661 offenbarten technischen Lehre ist ein Verfahren und eine Vorrichtung beschrieben, bei denen mittels einer Einschubstange durch einen Kugelhahn hindurch Messsensoren in das Rohr einer Strömungsanlage hinein geschoben werden können. Die jeweilige Messung erfolgt also auch hier bei hinein geschobener Kolbenstange, wobei die Strömung am Ort der Messung im Rohr, also die lokalen Strömungsgeschwindigkeiten sowie der lokale Turbulenzgrad durch die Messung selbst verändert wird. Eine genaue Messung des Strömungsprofils im Rohr z.B. zur Kalibrierung eines magnetisch-induktiven Durchflussmessgerätes vor Ort ist mit der vorgestellten Vorrichtung somit auch hier nicht möglich.

Die Deutsche Patentschrift DE 32 14 734 beschreibt ein Milchmengenmessgerät zur Überwachung des Milchflusses während des Melkvorgangs mittels mit der Milchleitung hydraulisch verbundenen Mess- und Luftabscheidekammern, wobei die Messung durch einen mit einem Trennventil verbundenen magnetischen Schwimmer außerhalb der Rohrleitung erfolgt.

Eine weitere Strömungsanlage ist aus der US 5 396 814 A bekannt. Dies ist aber eine Ultraschallanordnung, die für optische Verfahren ungeeignet ist.

Die US 5 131 741 beschreibt eine Strömungsanlage mit einer Vorrichtung für optische Messungen mit einem fluiddicht an der Strömungsanlage installierten Rohr.

Der vorliegenden Erfindung liegt demzufolge die Aufgabe zugrunde, die nachträgliche Zugänglichkeit zu Fluiden für Strömungsmessungen nach dem Verfahren Laser-Doppler-Velozimetrie und Partikel-Image-Velozimetrie in schon im Betrieb befindlichen Strömungsanlagen ohne Unterbrechung des Anlagenbetriebes und ohne Beeinflussung der Fluidströmung zu ermöglichen.

Diese Aufgabe wird durch eine Einsetzvorrichtung nach Anspruch 1, ein Verfahren mit den Merkmalen des Anspruchs 6 und durch eine Strömungsanlage mit den Merkmalen des Anspruchs 11 gelöst. Vorteilhafte Ausführungen sind in den Unteransprüchen beschrieben. Die aus den einzelnen Ausführungen hervorgehenden Merkmale sind jedoch nicht jeweils beschränkt auf die einzelne Ausgestaltung. Vielmehr können ein oder mehr Merkmale aus ein oder mehreren Ausgestaltungen herausgelöst und zu einer weiteren Ausgestaltung verbunden werden. Dieses gilt insbesondere für die Ausgestaltungen der nachfolgenden Beispiele. Die dort angeführten einzelnen Merkmale können auch einzeln betrachtet werden und sind nur der Veranschaulichung wegen so wie nachfolgend beschrieben zusammengefasst, ohne damit darauf beschränkt zu sein.

Hinsichtlich eines einsetzbaren Messsystems, einsetzbarer Messverfahren, Messmöglichkeiten, Ausgestaltungen und Korrelationen zwischen verschiedenen Messystemen und dem Abgleichen zwischen diesen und weiterem wird im Rahmen dieser Offenbarung vollständig auf die Deutschen Patentanmeldung DE 10 2007 053 105 verwiesen, deren gesamter Inhalt hier mit aufgenommen wird. Dort wird zum Beispiel ein Verfahren sowie eine Vorrichtung zur Durchführung des Verfahrens offenbart, mit deren Hilfe bei der volumetrischen Durchflussmessung von Fluiden in Rohrleitungen eine adaptive Messkalibrierung direkt in der Anlage vor Ort und die Diagnose weiterer Strömungsparameter wie Wirbelausbildung, Drall und Strömungsverteilung in axialer und Umfangsrichtung auch bei nicht idealen, asymmetrischen sowie wirbel- und Drall behafteten Strömungen am Messort, hervorgerufen beispielsweise durch unzureichende Vor- und Nachlaufbedingungen der Messeinrichtung, ermöglicht wird, ohne die Strömungsverhältnisse durch die Messung selbst zu beeinflussen. Dabei wird beispielsweise eines der bekannten Volumenstrom-Messverfahren wie MID oder Ultraschallverfahren zur Messgerätekalibrierung mit einem der bekannten optischen Strömungsmessverfahren wie der Laser-Doppler-Velozimetrie (LDV) oder der Partikel-Image-Velozimetrie (PIV) kombiniert. Hierzu kann die Messvorrichtung für das optische Strömungsmessverfahren einem Durchflussmessgerät wie einem magnetisch-induktiven Durchflussmessgerät (MID) voroder nachgeschaltet sein oder darin integriert sein.

Gemäß der hier vorgeschlagenen technischen Lehre können schon im Betrieb befindliche Strömungsanlagen zur Herstellung der optischen Zugänglichkeit für optische Strömungsmessverfahren genutzt werden, wobei ein Teil der Strömungsanlage beispielsweise durch ein Rohrleitungsstück mit einer Fensterkammer bzw. mit darin integrierten Fenstern ersetzt wird. Hierzu ist es bevorzugt nicht erforderlich, dass die Anlage außer Betrieb genommen und im Bedarfsfall entleert wird. Dies ist häufig, beispielsweise bei Fernwärmenetzen, mit sehr hohen Betriebsausfallkosten verbunden.

Die Herstellung der optischen Zugänglichkeit zu Strömungsanlagen und Teilen von Strömungsanlagen für die Messung der Strömungsgeschwindigkeit, des Förderstromes und des Strömungsgeschwindigkeitsfeldes von Fluiden in Strömungsanlagen mittels optischer Messverfahren, insbesondere zur nachträglichen Herstellung der optischen Zugänglichkeit zu Fluiden für Strömungsmessungen nach den Verfahren Laser-Doppler-Velozimetrie (LDV) und Partikel-Image-Velozimetrie (PIV) in schon im Betrieb befindlichen Strömungsanlagen ohne Unterbrechung des Anlagenbetriebs und ohne Beeinflussung der Fluidströmung durch die Messung oder die Messvorrichtung selbst ist mit der hier vorgestellten Vorrichtung und dem hier bereitgestellten Verfahren möglich.

Es wird daher eine Anwendung einer nachträglich an einem Fluidleitungssystem abnehmbar angeordneten Strömungsmessvorrichtung zur Korrelierung von Messergebnissen dieser Strömungsmessvorrichtung mit denjenigen von einer zweiten, fest im Fluidleitungssystem eingebauten Strömungsmessvorrichtung vorgeschlagen.

Die vorgeschlagene technische Lehre wird beispielsweise in Fernwärmenetzen, Gasnetzen, industriellen Rohrleitungssystem oder sonstigen fluidführenden Systemen eingesetzt. Sie kann unter Explosionsschutz-Bedingungen genutzt werden, zum Beispiel durch hierfür zugelassene Bearbeitungsverfahren zum Aufsetzen und Dichten der Vorrichtung. Die zu messenden Fluide können flüssig, gasförmig oder Suspensionen sein wie auch Festkörper zum Beispiel Körner, Partikel oder sonstiges umfassen. Das Fluid kann heiß wie auch kalt sein. Das Rohrleitungssystem kann ein- oder mehrfach ummantelt sein. Insbesondere besteht auch die Möglichkeit, bei ummantelten, zum Beispiel mit einem Schutzgas, mit einem Über- oder mit einem Unterdruck versehene, in Mantelzwischenbereichen gefüllte Rohrleitungssysteme ebenfalls mit der vorgeschlagenen technischen Lehre zu versehen.

Eine weitere Ausgestaltung der vorgeschlagenen technischen Lehre sieht vor, dass während des Anlagenbetriebs ein zumindest rohrähnlicher Gegenstand der vorgeschlagenen Vorrichtung auf die Strömungsanlage im Bereich der durchzuführenden Strömungsmessung fluiddicht installiert, auf diesem eine Absperrarmatur montiert und mittels eines Anbohrverfahrens unter Druck, bevorzugt einem Hot-Tapping-Verfahren, die Strömungsanlage in einer angeordneten Vorrichtung aufgebohrt, ein Einschubfenster in das Vorrichtungsgehäuse dergestalt eingeschoben und arretiert wird, dass die dem Fluid zugewandte Seite des Einschubfensters der Strömungsanlagenkontur an dieser Stelle bevorzugt entspricht und abschließend die Einschubvorrichtung aus dem Vorrichtungsgehäuse wieder entfernt und auf dem Vorrichtungsgehäuse ein Schauglas montiert wird, so dass an dieser Anlagenstelle während des Anlagenbetriebs die optische Zugänglichkeit zum Fluid für optische Strömungsmessungen hergestellt wird, ohne die Strömung im Anlagenströmungskanal bzw. der Strömungsgrenzschicht der Anlage zu beeinflussen und ohne den Anlagenbetrieb unterbrechen zu müssen. Der gesamte Vorgang erfolgt dabei durch den geeigneten Einsatz der Absperrarmatur sowie durch Dichtelemente zwischen Einschubvorrichtung und Vorrichtungsgehäuse ohne Fluidleckage aus der Strömungsanlage bzw. der hierfür auf der Rohrleitung angeordneten Vorrichtung.

Die vorgeschlagene technische Lehre ermöglicht beispielweise in schon vorhandenen Anlagen wie sich im Betrieb befindlichen Fernwärmenetzen die volumetrische Durchflussmessung sowie die adaptive Messkalibrierung volumetrischer Durchflussmessungen von Fluiden mittels optischer Strömungsmessverfahren wie Laser-Doppler-Velozimetrie und Partikel-Image-Velozimetrie direkt in der Anlage vor Ort, ohne für den Einbau der Vorrichtung oder die Durchführung der Strömungsmessung den Anlagenbetrieb unterbrechen zu müssen und ohne die Strömungsverhältnisse durch die Messung selbst zu beeinflussen.

In einer vorteilhaften Ausgestaltung der Erfindung wird als fluiddichte Installation eines Vorrichtungsrohres auf die Strömungsanlage ein Anschweißrohr auf die Wand der Strömungsanlage, insbesondere auf eine Rohrleitung der Strömungsanlage fluiddicht im Bereich der durchzuführenden Strömungsmessung aufgeschweißt.

In einer weiteren vorteilhaften Ausgestaltung handelt es sich bei der auf das Anschweißrohr zu montierenden Absperrarmatur beispielsweise um einen Kugelhahn oder um einen Flachschieber, wobei für die Funktionsfähigkeit der Vorrichtung beispielsweise entscheidend ist, dass bei geöffneter Armaturstellung auch innerhalb der Armatur der volle Vorrichtungs-Innendurchmesser zum Einschieben des Einschubfensters gewährleistet ist. In einer weiteren vorteilhaften Ausgestaltung ist auf der Absperrarmatur ein Einsteckrohr montiert, um bei der Durchführung des Einschubverfahrens bzw. beim Wiederherausnehmen des Einschubfensters einen leckagefreien Verfahrensablauf zu vereinfachen.

In einer weiteren vorteilhaften Ausgestaltung sind insbesondere bei höheren Anlagendrücken Vorrichtungsgehäuse und die Einschubvorrichtung beispielsweise mittels eines Fangseiles trennbar miteinander verbunden, das durch eine geeignete Länge verhindert, dass bei geöffneter Absperrarmatur die Einschubvorrichtung versehentlich aus dem Vorrichtungsgehäuse herausrutscht und damit u.U. gefährliche Fluidleckagen aus der Strömungsanlage verhindert. Das Fangseil kann dabei vorteilhaft mittels Ringösen und Karabinerhaken bzw. Schraubschäkel an den Vorrichtungsteilen trennbar verbunden sein.

In einer weiteren vorteilhaften Ausgestaltung der Erfindung ist die Arretierung des Einschubfensters in das Vorrichtungsgehäuse (Anschweißrohr) als Bajonettverschluss ausgeführt. Hierbei sind in vorteilhafter Weise die Einschubfenster-Bajonettriegel mit doppelseitig wirkenden Federdruckstiften ausgestattet, die zur Arretierung des Einschubfensters beispielsweise in entsprechende Anbohröffnungen des Anschweißrohr-Bajonettverschlusses einrasten.

In einer weiteren vorteilhaften Ausgestaltung ist die Arretierung des Einschubfensters in die Einschubvorrichtung als Bajonettverschluss ausgeführt. Hierbei sind in vorteilhafter Weise die Einschubvorrichtungs-Bajonettriegel mit doppelseitig wirkenden Federdruckstiften ausgestattet, die zur Arretierung der Einschubvorrichtung beispielsweise in entsprechende Anbohröffnungen des Einschubfensters bzw. der Einschubfensterhülse einrasten.

In einer weiteren Ausgestaltung ist für die Installation des Einschubfensters im Aufbohrbereich der Strömungsanlage eine Momentenabstützung, betätigt durch eine Momentenabstützwelle, vorgesehen, die beim Lösen der Arretierung zwischen dem Einschubfenster und der Einschubvorrichtung das Lösen der Arretierung zwischen Einschubfenster und dem Anschweißrohr verhindert.

Eine Ausgestaltung sieht vor, dass ein Sichtfenster in einer Fassung eingebracht wird. Eine Fassung kann dann verklebt, formschlüssig eingebracht oder auch verschraubt werden. Eine Innenwand eines einzubringenden Sichtfensters ist bevorzugt angepasst an eine Innenrundung des Rohrabschnitts, in dem das Sichtfenster angeordnet ist. Bevorzugt wird das Sichtfenster ohne eine Stufe angeordnet, so dass eine laminare Wandströmung möglichst ungestört bleibt und eine Turbulenzerzeugung vermieden wird.

Neben einem Einbringen des Sichtfensters mittels eines Hot-Tapping-Verfahrens können auch alternative Verfahren zur Befestigung genutzt werden, die bevorzugt ein dichtendes Einbringen einer Bohrung im laufenden Betrieb ermöglichen.

Die von außen angeordnete Messeinrichtung kann zum Beispiel als redundantes System genutzt werden, sollte zum Beispiel ein Messsystem ausgefallen sein, insbesondere ein fest eingebautes Messsystem. Auch kann eine Kalibrierung von ein oder mehreren anderen Messsystemen mittels des außen angeordneten Messsystems vorgesehen sein. Beispielsweise können Messwerte der Messsysteme miteinander korreliert werden, zum Beispiel um Abweichungen der Durchflußmenge zu ermitteln. Die Systeme können dazu miteinander datenübertragungstechnisch vernetzt sein. Beispielsweise ist eine Recheneinheit evtl. direkt angeschlossen, um ein Fehlvolumen zu ermitteln auf Basis fehlerhafter Messwerte. Beispielweise kann mittels der außen angeordneten Messanordnung eine permanente Messung, eine wiederholende Messung oder ein Messprofil nachgefahren werden. Auch kann eine zeitgebundene Messung erfolgen, zum Beispiel eine 24-Stunden-Messung, um damit einen Belastungswechsel einer Fluidleitung über einen Einsatzzeitraum ermitteln zu können. Bevorzugt erfolgt eine Vernetzung des Messystems und/oder einer Auswerteinheit mit einem Abrechnungssystem mit einer Fernwarte, mit einem Datenspeicher, einem mobilen Auswerte- und Speichergerät und/oder einem stationären Auswertegerät.

Gemäß einer Weiterbildung kann das im Rohrsystem erzeugte Fenster auch verschlossen werden, zum Beispiel wiederverschließbar sein, beispielsweise mittels einer Manschette fluiddicht verschlossen werden.

Eine Weiterbildung ist derart, dass eine Abdichtung vorgesehen ist, die ein Einführen einer rohrförmigen Geometrie in Richtung Rohrleitung ermöglicht. Diese Abdichtung verhindert zum Beispiel einen Austritt von Fluid. Die Abdichtung kann als Dichtung in dem ersten, einzuführenden Bauteil und/oder in dem zweiten Bauteil angeordnet sein, in dass das erste Bauteil eingeführt wird. Beispielsweise ist vorgesehen, dass das Einschubrohr gegenüber dem Vorrichtungsgehäuse, d.h. gegenüber dem Anschweißrohr, der Absperrarmatur und dem Einsteckrohr sowie Einschubrohr gegenüber Momentenabstützung bzw. Momentenabstützwelle mittels einer Rundschnurdichtung abgedichtet sind, um Leckage aus der Strömungsanlage während des Einschiebens oder Herausziehens der Einschubfensteranordnung bei geöffneter Absperrarmatur zu verhindern.

Weiterhin ist es bevorzugt, wenn eine Sicherung vorhanden ist zwischen einem an der Rohrleitung befestigten Bauteil und dem einzuführendem Bauteil. Dieses verhindert eine Verletzungsgefahr, sofern aufgrund eines plötzlichen Druckanstiegs ansonsten das einzuführende Bauteil herausgerückt werden würde. Weiterhin kann eine Sperre vorgesehen sein, die erst gelöst werden muss, damit das einzuführende Bauteil wieder herausgeführt werden kann. Die Sperre kann beispielsweise auch als Ratsche ausgeführt sein, so dass das eingeführte Bauteil immer gegen ein Ratschenelement gedrückt werden kann und dadurch dessen Rausziehbewegung gesperrt wird, bevorzugt entlang zumindest eines Teils des Wegs, insbesondere entlang zumindest des meisten, weiter bevorzugt entlang des gesamten Wegs. des einzuführenden Bauteils. Gemäß einer Ausgestaltung ist vorgesehen, dass das Einschubrohr (13) und das Einsteckrohr mit Fangseilösen versehen werden, die trennbar mit einem Fangseil in der Art verbunden sind, dass das Einschubrohr bei eingehängtem Fangseil nicht komplett aus dem Einsteckrohr herausschiebbar ist, um zu verhindern, dass bei geöffneter Absperrarmatur durch versehentliches Herausziehen des Einschubrohres Fluid aus der Vorrichtung austreten kann, d.h., dass die Absperrarmatur nur geöffnet wird, wenn entweder das Einschubrohr mittels des Fangseils im Einsteckrohr gesichert oder das Schauglas fluiddicht auf der Vorrichtung montiert ist. Beispielsweise kann ein Fangseil mit dem Einschubrohr und dem Einsteckrohr mittels Karabinerhaken trennbar verbunden sein.

Bevorzugt wird ein Druck, der in der Leitung herrscht, in der eine Strömungsmessung zukünftig mittels optischem Messverfahren ermöglicht werden soll, mittels der Absperrarmatur so zurückgehalten, dass auch eine unbeabsichtigte Freisetzung des Fluides aus dem Leitungssystem vermieden wird. Beispielsweise kann eine Sperre vorgesehen sein. Erst nach Überwinden der Sperre oder aber Freigabe der Sperre kann beispielsweise die Armatur betätigt werden. Gemäß einer Ausgestaltung ist vorgehen, dass es sich bei der Absperrarmatur um einen Kugelhahn handelt. Eine weitere Ausgestaltung sieht vor, dass es sich bei der Absperrarmatur um einen Flachschieber handelt. Eine Weiterbildung sieht vor, dass ein automatisches Sperren mittels der Armatur erfolgt. Hierfür kann beispielsweise ein Stellwächter vorgesehen sein. Auch kann ein Rückschlagmechanismus vorgesehen sein, der bevorzugt verhindert, dass zumindest teilweise Fluid aus dem Leitungsnetz unbeabsichtigt freigesetzt wird.

Eine weitere Ausgestaltung sieht vor, dass bei ausreichender Länge des freien Einschubbereichs der Absperrarmatur vor dem Absperrelement, d.h. auf der der Strömungsanlage abgewandten Seite, auf den Einsatz eines Einsteckrohres verzichtet werden kann und im Bedarfsfall zur Verhinderung eines versehentlichen Herausziehens des Einschubrohres das Einschubrohr und die Absperrarmatur mittels Fangseilösen, Karabinerhaken und einem Fangseil trennbar verbunden sind.

Gemäß einer Ausgestaltung ist vorgesehen, dass die optischen Strömungsmessungen des Fluids in der Strömungsanlage mittels eines Laser-Doppler-Velozimeters (LDV) erfolgen. Beispielsweise ist vorgesehen, dass durch sukzessives Verschieben einer LDV-Sonde mittels einer Traversiervorrichtung der Strömungsquerschnitt in der Rohrleitung durch das Einschubfenster, die geöffnete Absperrarmatur und ein Schauglas hindurch nacheinander abgetastet und somit das Strömungsprofil ermittelt werden kann.

Gemäß einer weiteren Ausgestaltung ist vorgesehen, dass die optischen Strömungsmessungen des Fluids in der Strömungsanlage mittels eines Partikel-Image-Velozimetrie (PIV) Verfahrens erfolgen. Es können auch andere optische Methoden zum Einsatz kommen. Auch können Kombinationen von verschiedenen optischen Messmethoden zusammen genutzt oder auch aneinander eingesetzt werden. Des Weiteren besteht die Möglichkeit, dass zusätzlich auch eine Ultraschallmessung ausgeführt wird. Auch könne ein oder mehrere andere Messungen zusätzlich ausgeführt werden, die beispielsweise nicht berührungslos sind.

Eine Weiterbildung sieht vor, dass durch das optische Messverfahren ein magnetisch-induktives Durchflussmessgerät (MID) kalibriert wird. Es besteht weiterhin die Möglichkeit, dass durch das optische Messverfahren ein Ultraschall-Durchflussmessgerät kalibriert wird.

Das nachträglich eingebrachte Messverfahren ist bevorzugt in der Lage mittels der optischen Strömungsmessungen in der Strömungsanlage am Messort Strömungsgeschwindigkeit, Wirbelausbildung, Drall und/oder Strömungsverteilung in axialer und Umfangsrichtung zu ermitteln.

Beispielsweise ist vorgesehen, dass eine vorgeschlagene Einschubvorrichtung zur Herstellung der optischen Zugänglichkeit für optische Strömungsmessverfahren zur Messgerätekalibrierung am Durchflussmessgerät direkt installiert wird.

Eine weitere Ausgestaltung sieht vor, dass eine Einschubvorrichtung zur Herstellung der optischen Zugänglichkeit für optische Strömungsmessverfahren zur Messgerätekalibrierung am Durchflussmessgerät dem Durchflussmessgerät in Strömungsrichtung betrachtet nachgeschaltet ist. Eine andere Ausgestaltung sieht vor, dass die Einschubvorrichtung stromaufwärts zu dem Durchflussmengengerät angeordnet ist. Bevorzugt sind das Durchflussmengengerät und die Einschubvorrichtung nicht mehr als fünf Meter voneinander getrennt, bevorzugt nicht mehr als drei Meter, besonders bevorzugt weniger als einen Meter und insbesondere weniger als 0,5 Meter. Je nach Rohrdurchmesser, Strömungsverhältnis wie auch Durchflussmengengerät kann von diesen Angaben auch abgewichen werden. So ist gemäß einer weiteren Ausgestaltung eine vorgeschlagene Einschubvorrichtung zur Herstellung der optischen Zugänglichkeit für optische Strömungsmessverfahren zur Messgerätekalibrierung am Durchflussmessgerät dem Durchflussmessgerät in Strömungsrichtung betrachtet vorgeschaltet.

Eine Ausgestaltung der Anordnung für die optische Messvorrichtung sieht vor, dass zur Installation des Rohres auf der Strömungsanlage das Rohr auf der Wand der Strömungsanlage im Messbereich d.h. im Aufbohrbereich fluiddicht aufgelötet wird. Es kann auch aufgenietet oder durch eine sonstige Massnahme gesichert sein, zum Beispiel mittels einer Manschette, die um die Rohrleitung umläuft. Eine weitere Ausgestaltung sieht vor, dass zur Installation des Rohres auf der Strömungsanlage das Rohr auf der Wand der Strömungsanlage im Messbereich d.h. im Aufbohrbereich fluiddicht aufgeklebt wird.

Um eine optische Messmethode nachträglich zu ermöglichen, wird ein Einschubfenster in die Rohrwandung eingesetzt. Bevorzugt ist das Einschubfenster in der Einschubfensterhülse mittels eines elastischen Klebstoffs verklebt. Weiter bevorzugt ist das Einschubfenster in der Einschubfensterhülse mittels eines Silikonklebers verklebt. Das Einschubfenster kann aus Quarzglas bestehen, es kann aber auch aus Kunststoff bestehen, zum Beispiel einem Acryl. Gemäß einer Ausgestaltung ist das Einschubfenster für das menschliche Auge durchsichtig, bevorzugt farblos. Eine weitere Ausgestaltung sieht vor, dass das Einschubfenster als definierter Filter während der Messung dient.

Die optische Messvorrichtung wird gemäß einer Ausgestaltung händisch in Position gebracht und kann weiterhin auch händisch in verschiedene weiter Messpositionen verschoben werden. Eine Weiterbildung sieht vor, dass ein oder mehrere Stellmotoren genutzt werden. Beispielsweise kann dadurch eine automatisierte Messung ermöglicht werden.

Ein Einsteckrohr, Einschubrohr und/oder eine Momentenabstützwelle können mit Markierungen versehen sein, so dass während des gesamten Einschub- und Herausziehvorgangs der Einschubfensteranordnung sowohl die genaue Axial- und Winkelposition der Einschubfensteranordnung gegenüber dem Anschweißrohr bzw. der Anschweißrohrarretierung als auch der Einschubfensteranordnung gegenüber der Einschubvorrichtung bekannt ist.

Eine Weiterbildung sieht vor, dass eine automatisierte Messaufnahme vorgesehen ist. So ist die Messvorrichtung zum Beispiel an einen tragbaren Messrekorder und/oder einen tragbaren Computer angeschlossen. Auch kann beispielsweise über eine Ferndatenverbindung ein Anschluss zu einer Weiterverarbeitungsanlage vorgesehen sein. Dieses kann auch eine Fernwarte umfassen. Eine Ferndatenverbindung kann beispielsweise eine Funkstrecke wie auch eine leitungsgebundene Datenübertragung vorsehen.

Bevorzugt ist des Weiteren, dass in der Wand des auf der Strömungsanlage fluiddicht aufgeschweißten Anschweißrohres mindestens ein zusätzliches optisch durchlässiges Fenster angeordnet ist, das auch Strömungsmessungen bzw. Kalibriermessungen schräg durch mindestens eines dieser Fenster sowie durch die Einschubfensteranordnung hindurch im Fluid der Strömungsanlage ermöglicht.

Gemäß einer weiteren Ausgestaltung ist vorgesehen, dass der Innenraum der Vorrichtung, insbesondere bei aggressiven Medien, durch geeignete Abdichtungsmaßnahmen der Einschubfensteranordnung gegenüber dem Anschweißrohr bzw. der Rohrleitung der Strömungsanlage fluiddicht abgedichtet ist.

Beispielsweise ist vorgesehen, dass, um die Wandstärke des Einschubfensters möglichst gering wählen zu können, der Innenraum der Vorrichtung gegenüber dem Fluid der Strömungsanlage durch mindestens eine Druckentlastungs-Öffnung in der Einschubfensteranordnung und bei Bedarf in der Arretierungseinrichtung des Anschweißrohres druckentlastet ist.

Eine weitere bevorzugte Ausgestaltung sieht vor, dass eine Absperrarmatur in dem auf der Strömungsanlage installierten Rohr konstruktiv integriert ist, um hier die Baulänge reduzieren und vorzugsweise auf eine Montagevorrichtung der Absperrarmatur auf dem installierten Rohr wie einer Schraubflanschverbindung verzichten zu können.

Nachfolgend wird ein bevorzugtes Ausführungsbeispiel der vorgeschlagenen technischen Lehre weiter unter Bezugnahme auf die beigefügten Zeichnungen erläutert. Die jeweiligen Ausgestaltungen und Merkmale sind jedoch nur beispielhaft und erläuternd, ohne dass deswegen aber dadurch der Schutzbereich eingeschränkt werden soll. Vielmehr sind auch für einzelne Merkmale alternative Ausgestaltungen einsetzbar. Darüber hinaus sind die aus den einzelnen Figuren hervorgehenden Merkmale nicht auf die jeweilige Figur beschränkt. Vielmehr können einzelne oder mehrere dieser Merkmale mit anderen Merkmalen aus anderen Figuren und/oder der obigen Beschreibung zu weiteren Ausgestaltungen der vorgeschlagenen technischen Lehre verknüpft werden. Es zeigen:
Fig. 1 eine erfindungsgemäße Vorrichtung in einer Einschubkonfiguration, und
Fig.2 eine erfindungsgemäße Vorrichtung in einer Messkonfiguration.

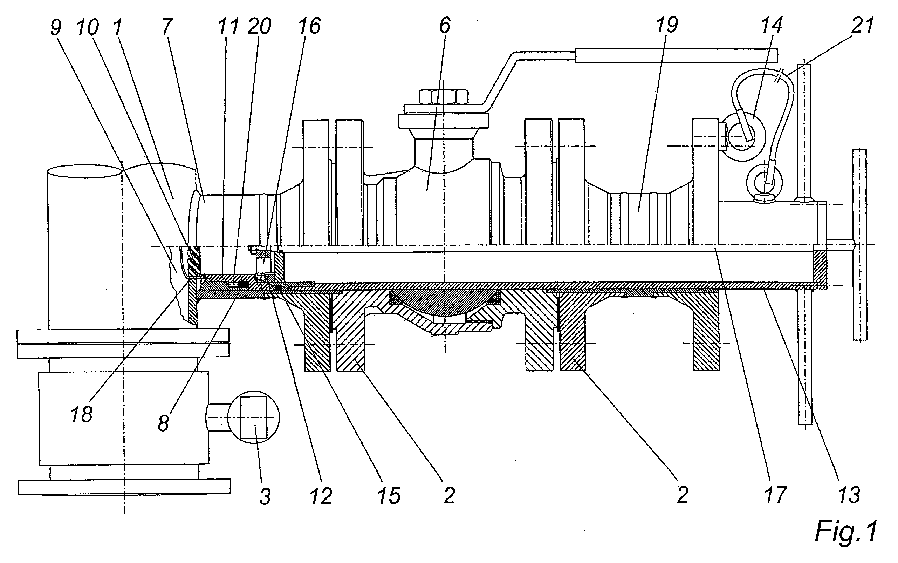

In Fig.1 ist eine vorgeschlagene Einschubvorrichtung mit einem im Aufbohrbereich 18 fluiddicht aufgeschweißten Anschweißrohr 7 und einer Bohrung in der Wand der hydraulischen Anlage 1 innerhalb des Anschweißrohres 7 dargestellt. In der Rohrleitung der hydraulischen Anlage 1 fließt dabei ein Fluid 9. Mittels einer Schraubflanschverbindung 2 ist ein Kugelhahn 6 auf dem Anschweißrohr 7 montiert, und auf diesem ein Einsteckrohr 19 zum erleichterten Einschieben der Einschubvorrichtung 12,13 in das Vorrichtungsgehäuse. Im Aufbohrbereich 18 der hydraulischen Anlage 1 befindet sich ein Einschubfenster 10, 11, das im Anschweißrohr 7 mittels eines Bajonettverschlusses 8 lösbar arretiert ist, so dass die dem Fluid 9 zugewandte Seite des Einschubfensters 10 der Strömungskanalkontur der hydraulischen Anlage 1 am Messort entspricht. Die Einschubvorrichtung 12, 13 ist geeignet, zum Einen die Einschubfensteranordnung 10, 11 in den Aufbohrbereich 18 der hydraulischen Anlage 1 zu schieben und dort im Bajonettverschlusses 8 des Anschweißrohres 7 zu befestigen, und zum Anderen, die Einschubfensteranordnung 10, 11 aus dem Bajonettverschlusses 8 des Anschweißrohres 7 zu lösen und aus der vorgeschlagenen Vorrichtung wieder herauszuziehen. Die lösbare Arretierung zwischen dem Einschubfensteranordnung 10, 11 und der Einschubvorrichtung 12, 13 erfolgt ebenfalls durch Bajonettverschluss 12. Für die Installation der Einschubfensteranordnung 10, 11 im Aufbohrbereich 18 der hydraulischen Anlage 1 ist eine Momentenabstützung 16, betätigt durch eine Momentenabstützwelle 17, vorgesehen, die beim Lösen des Bajonettverschlusses 12 zwischen der Einschubfensteranordnung 10, 11 und der Einschubvorrichtung 12, 13 das Lösen des Bajonettverschlusses 8 zwischen Einschubfensteranordnung 10, 11 und dem Anschweißrohr 7 verhindert. Die Bajonettverschlüsse 8, 12 sind als Anbohröffnungen ausgeführt, in die doppelt wirkende Federdruckstifte 20 einrasten. Auf dem Kugelhahn 6 ist ein Einsteckrohr 19 zum erleichterten Einschieben und Herausziehen der Einschubvorrichtung 12, 13 montiert. Das Einschubrohr 13 ist gegenüber dem Anschweißrohr 7, dem Kugelhahn 6 und dem Einsteckrohr 19 mittels einer Rundschnurdichtung 15 abgedichtet, um Leckage aus der Strömungsanlage 1 während des Einschiebens oder Herausziehens der Einschubfensteranordnung 10, 11 bei geöffnetem Kugelhahn 6 zu verhindern. Einsteckrohr 19 und Einschubvorrichtung 12, 13 sind mittels Ringösen, Karabinerhaken bzw. Schraubschäkel und eines Fangseiles 21 trennbar miteinander verbunden, das durch geeignete Länge verhindert, dass bei geöffnetem Kugelhahn 6 die Einschubvorrichtung 12, 13 versehentlich aus dem Einsteckrohr 19 herausrutscht und damit u.U. gefährliche Fluidleckagen aus der Strömungsanlage verursacht.

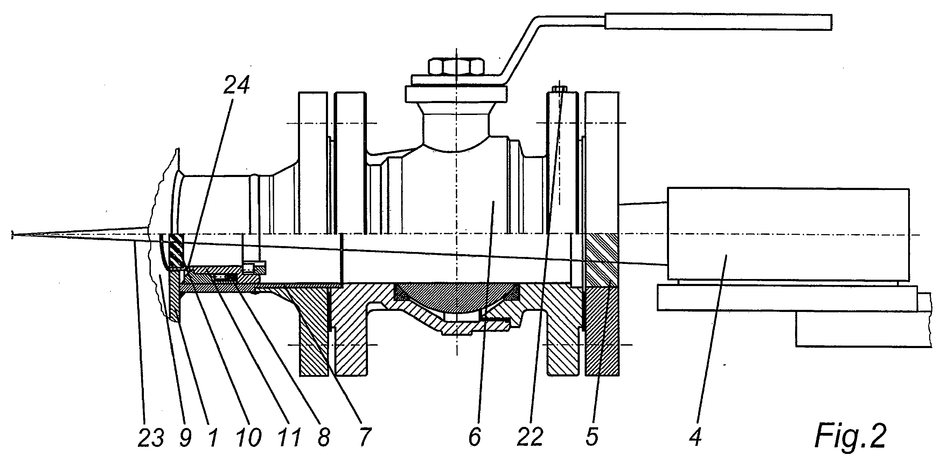

Fig.2 zeigt die Vorrichtung aus Fig. 1 in der Messkonfiguration, d.h. das Einschubfenster 10, eingeklebt in eine Einschubfensterhülse 11, ist hier im Bajonettverschluss 8 des Anschweißrohres 7 eingerastet, die Einschubvorrichtung aus dem Vorrichtungsgehäuse herausgezogen, das Einsteckrohr vom Kugelhahn 6 zur Verkürzung der Messanordnung demontiert und ein Schauglasflansch 5 fluiddicht auf dem Kugelhahn 6 montiert, so dass somit die optische Zugänglichkeit zum Fluid 9 für den Laser-Kreuzstrahl 23 des Laser-Doppler-Velozimeters (LDV) 4 hergestellt ist. Eine Entlüftungseinrichtung 22 sorgt dafür, dass für die Lasermessungen der gesamte Innenraum der vorgeschlagenen Vorrichtung mit dem Fluid 9 befüllt ist. Dabei kann entweder der Innenraum der Vorrichtung, beispielsweise bei aggressiven Medien, durch geeignete Abdichtungsmaßnahmen der Einschubfensteranordnung 10,11 gegenüber dem Anschweißrohr 7 bzw. der Rohrleitung abgedichtet sein, oder im Gegenteil, wie hier dargestellt, um die Wandstärke des Einschubfensters 10 möglichst gering wählen zu können, zwischen Fluid 9 der hydraulischen Anlage 1 und dem Innenraum der Vorrichtung durch eine Druckentlastungs-Bohrung 24 in der Einschubfensteranordnung 10, 11 eine Druckentlastung erfolgen. Durch sukzessives Verschieben des Laser-Doppler-Velozimeters (LDV) 4 mittels einer Traversiervorrichtung wird der Strömungsquerschnitt in der Rohrleitung der hydraulischen Anlage 1 durch das Einschubfenster 10 und den Schauglasflansch 5 hindurch mit dem LDV-Verfahren nacheinander abgetastet und somit das Strömungsprofil in axialer und/oder Umfangsrichtung ermittelt bzw. z.B. das magnetisch-induktive Messgerät (MID) 3 kalibriert werden.

### Bezugszeichenliste

- **1**: Rohrleitung einer hydraulischen Anlage
- **2**: Schraubflanschverbindung
- **3**: magnetisch-induktives Durchfluss-Messgerät (MID)
- **4**: Laser-Doppler-Velozimeter (LDV)
- **5**: Schauglasflansch
- **6**: Kugelhahn
- **7**: Anschweißrohr (auch einfach als Rohr bezeichnet)
- **8**: Anschweißrohr-Bajonettverschluss
- **9**: Fluid
- **10**: Einschubfenster
- **11**: Einschubfensterhülse
- **12**: Fensterhülsen-Bajonettverschluss
- **13**: Einschubrohr
- **14**: Fangseilöse
- **15**: Rundschnurdichtung
- **16**: Momentenabstützung
- **17**: Momentenabstützwelle
- **18**: Aufbohrbereich der Strömungsanlage
- **19**: Einsteckrohr
- **20**: Doppelseitig wirkender Federdruckstift
- **21**: Fangseil
- **22**: Entlüftungseinrichtung
- **23**: Laser-Kreuzstrahl
- **24**: Druckentlastungs-Bohrung

## Patentansprüche

1. Einsetzvorrichtung zur Herstellung der optischen Zugänglichkeit zu einer Strömungsanlage (1) für die Messung der Strömungsgeschwindigkeit, des Förderstromes und des Strömungsgeschwindigkeitsfeldes von Fluiden (9) in der Strömungsanlage mittels optischer Messverfahren, umfassend
- eine Einschubfensteranordnung (10, 11), bestehend aus einem in eine Einschubfensterhülse (11) eingeklebten Einschubfenster (10),
- wobei die Einschubfensteranordnung (10, 11) Mittel für einen ersten Bajonettverschluss (8) zur lösbaren Arretierung der Einschubfensteranordnung (10, 11) in einem an der Strömungsanlage (1) installierten Rohr (7) aufweist,
- wobei die Einschubfensteranordnung (10, 11) Mittel für einen zweiten Bajonettverschluss (12) zur lösbaren Arretierung der Einschubfensteranordnung (10, 11) an einer Einschubvorrichtung (13) aufweist, die geeignet ist, die Einschubfensteranordnung (10, 11) in das an der Strömungsanlage (1) installierten Rohr (7) hineinzuschieben und herauszuziehen.

2. Einsetzvorrichtung nach Anspruch 1, mit einer Einschubvorrichtung (13), die Mittel für den zweiten Bajonettverschluss (12) zur lösbaren Arretierung der Einschubfensteranordnung (10, 11) an der Einschubvorrichtung (13) aufweist.

3. Einsetzvorrichtung nach Anspruch 2, wobei die Einschubvorrichtung (13) als Einschubrohr (13) ausgebildet ist, das eine Rundschnurdichtung (15) zur Abdichtung gegenüber dem Fluid (9) in der Strömungsanlage (1) aufweist.

4. Einsetzvorrichtung nach einem der vorhergehenden Ansprüche, wobei die Einschubfensteranordnung (10, 11) zur fluiddichten Abdichtung der Einschubfensteranordnung (10, 11) gegenüber dem an der Strömungsanlage (1) installierten Rohr (7) bzw. dem Fluid (9) in der Strömungsanlage (1) eine geeignete Abdichtung aufweist.

5. Einsetzvorrichtung nach einem der vorhergehenden Ansprüche, wobei die Einschubfensteranordnung (10, 11) eine Druckentlastungs-Öffnung (24) aufweist.

6. Verfahren zur Herstellung der optischen Zugänglichkeit zu einer Strömungsanlage (1) für die Messung der Strömungsgeschwindigkeit, des Förderstromes und des Strömungsgeschwindigkeitsfeldes von Fluiden in der Strömungsanlage mittels optischer Messverfahren, wobei die Strömungsanlage eine dem strömenden Fluid (9) zugewandte Innenwand aufweist, wobei bei dem Verfahren
- ein Rohr (7) auf einer strömungsmesstechnisch zu untersuchenden Stelle der Strömungsanlage (1) fluiddicht installiert wird,
- mindestens eine Absperrarmatur (6) an dem Rohr (7) fluiddicht montiert wird,
- durch ein Hot-Tapping-Anbohrverfahren unter Druck die Wand der Strömungsanlage (1) innerhalb des Rohres (7) aufgebohrt wird, wodurch innerhalb des Rohrs (7) eine Bohrung entsteht,
- vor dem vollständigen Herausziehen der Bohrvorrichtung die Absperrarmatur (6) geschlossen wird,
- die Einsetzvorrichtung aus Anspruch 1 in ein auf der Absperrarmatur (6) fluiddicht montiertem Einsteckrohr (19) eingeschoben wird,
- die Absperrarmatur (6) geöffnet und die Einsetzvorrichtung mittels einer Einschubvorrichtung (13) in die aufgebohrte Wand eingeschoben wird, wobei die Einschubvorrichtung (13) durch den zweiten Bajonettverschlusses (12) an der Einschubfensteranordnung (10, 11) lösbar arretiert ist,
- die Einschubfensteranordnung (10, 11) in dem Rohr (7) durch den ersten Bajonettverschluss (8) lösbar arretiert wird, wobei die der Strömung zugewandte Seite des Einschubfensters (10) und der Einschubfensterhülse (11) der Einschubfensteranordnung (10, 11) sich bündig an die Innenwand der Strömungsanlage (1) ohne Bildung einer die Strömung bzw. die Strömungsgrenzschicht beeinflussenden Stufe und mit nur geringem Spalt zwischen der Bohrung in der Wand und der Einschubfensterhülse (11) einfügt,
- die Arretierung zwischen der Einschubfensteranordnung (10, 11) und der Einschubvorrichtung (13) gelöst wird, wobei das Einschubfenster (10) mit der Einschubfensterhülse (11) in dem Rohr (7) arretiert bleibt,
- die Einschubvorrichtung (13) in das Einsteckrohr (19) zurückgezogen und die Absperrarmatur (6) geschlossen wird, um ein Austreten des Fluids (9) aus der Strömungsanlage (1) zu verhindern,
- das Einsteckrohr (19) von der Absperrarmatur (6) im Bedarfsfall zur Verkürzung der Messanordnung demontiert wird,
- ein Schauglas (5) auf der der Strömungsanlage (1) abgewandten Seite der Absperrarmatur (6) strömungsdicht montiert und die Absperrarmatur (6) nach Öffnen der Absperrarmatur (6) mit einer Entlüftungseinrichtung (22) entlüftet wird, so dass durch das Schauglas (5), die geöffnete Absperrarmatur (6) und das Einschubfenster (10) hindurch optische Strömungsmessungen des Fluids (9) in der Strömungsanlage (1) möglich sind.

7. Verfahren nach Anspruch 6, ***dadurch gekennzeichnet, dass*** die optischen Strömungsmessungen des Fluids (9) in der Strömungsanlage (1) mittels eines Laser-Doppler-Velozimeters (LDV) (4) erfolgen, wobei durch sukzessives Verschieben einer LDV-Sonde mittels einer Traversiervorrichtung der Strömungsquerschnitt in einer Rohrleitung der Strömungsanlage (1) durch das Einschubfenster (10), die geöffnete Absperrarmatur (6) und das Schauglas (5) hindurch nacheinander abgetastet und somit ein Strömungsprofil ermittelt wird.

8. Verfahren nach einem der Ansprüche 6 oder 7, ***dadurch gekennzeichnet, dass*** die optischen Strömungsmessungen des Fluids (9) in der Strömungsanlage (1) mittels eines Verfahrens der Partikel-Image-Velozimetrie (PIV) erfolgen.

9. Verfahren nach einem der Ansprüche 6 bis 8, ***dadurch gekennzeichnet, dass*** durch das optische Messverfahren ein magnetisch-induktives Durchflussmessgerät (MID) (3) oder ein Ultraschall-Durchflussmessgerät kalibriert wird.

10. Verfahren nach einem der Ansprüche 6 bis 9, ***dadurch gekennzeichnet, dass*** mittels der optischen Strömungsmessungen in der Strömungsanlage (1) am Messort Strömungsgeschwindigkeit, Wirbelausbildung, Drall und Strömungsverteilung in axialer und Umfangsrichtung ermittelt werden.

11. Strömungsanlage, umfassend
- eine das strömende Fluids (9) begrenzende Wand, die eine dem strömenden Fluid (9) zugewandte Innenwand aufweist,
- mindestens ein an der Wand fluiddicht installiertes Rohr (7), wobei die Wand innerhalb des installierten Rohrs (7) eine Bohrung in Form eines Kreissegments aufweist,
- mindestens eine Absperrarmatur (6), die auf dem Rohr (7) fluiddicht montiert ist und die mindestens eine Entlüftungseinrichtung aufweist,
- mindestens eine Einsetzvorrichtung nach Anspruch 1, wobei die Einschubfensteranordnung (10, 11) der Einsetzvorrichtung in dem Rohr (7) durch den ersten Bajonettverschluss (8) lösbar arretiert ist,
- wobei die der Strömung zugewandte Seite des Einschubfensters (10) und der Einschubfensterhülse (11) der Einschubfensteranordnung (10, 11) der Form des Kreissegments entspricht und die der Strömung zugewandte Seite des Einschubfensters (10) und der Einschubfensterhülse (11) sich bündig an die Innenwand ohne Bildung einer die Strömung bzw. die Strömungsgrenzschicht beeinflussenden Stufe und mit nur geringem Spalt zwischen der Bohrung in der Wand und der Einschubfensterhülse (11) einfügt,
- mindestens ein Einsteckrohr (19) zum Hineinschieben und Herausziehen einer Einschubvorrichtung (13), wobei das Einsteckrohr (19) an der Absperrarmatur (6) fluiddicht an der der Strömungsanlage (1) abgewandten Seite der Absperrarmatur (6) montiert ist.

12. Strömungsanlage nach Anspruch 11, ***dadurch gekennzeichnet, dass*** das an der Wand fluiddicht installierte Rohr (7) als auf der Wand im Messbereich d.h. im Aufbohrbereich (18) fluiddicht aufgeschweißtes Anschweißrohr (7) ausgeführt ist.

13. Strömungsanlage nach Anspruch 12, ***dadurch gekennzeichnet, dass*** in der Wand des auf der Strömungsanlage (1) fluiddicht aufgeschweißten Anschweißrohres (7) mindestens ein zusätzliches optisch durchlässiges Fenster angeordnet ist, das auch Strömungsmessungen bzw. Kalibriermessungen schräg durch mindestens eines dieser Fenster sowie durch die Einschubfensteranordnung (10, 11) hindurch im Fluid (9) der Strömungsanlage (1) ermöglicht.

14. Strömungsanlage nach einem der Ansprüche 11 bis 13, ***dadurch gekennzeichnet, dass*** die Absperrarmatur (6) in dem installierten Rohr (7) konstruktiv integriert ist.

## Claims

1. An insertion device for establishing optical accessibility to a flow system (1) for the purpose of measuring the flow velocity, the flow rate and the flow velocity field of fluids (9) in the flow system by means of optical measurement methods, comprising
- a push-in window assembly (10, 11) consisting of a push-in window (11) glued into a push-in window sleeve (10),
- wherein the push-in window assembly (10, 11) includes means for a first bayonet fastening (8) for detachable locking of the push-in window assembly (10, 11) inside a tube (7) installed in the flow system (1),
- wherein the push-in window assembly (10, 11) includes means for a second bayonet fastening (12) for detachable locking of the push-in window assembly (10, 11) to a push-in device (13) which is designed to extend and retract the push-in window assembly (10, 11) into and out of the tube (7) installed in the flow system (1).

2. The insertion device according to claim 1, with a push-in device (13) that includes the means for the second bayonet fastening (12) for detachable locking of the push-in window assembly (10, 11) to the push-in device (13).

3. The insertion device according to claim 2, wherein the push-in device (13) is designed as an push-in tube (13) having a round cord seal (15) for assuring a seal against the fluid (9) in the flow system (1).

4. The insertion device according to any one of the preceding claims, wherein the push-in window assembly (10, 11) includes a seal for ensuring fluid-tight sealing of the push-in window assembly (10, 11) from the tube (7) installed in the flow system (1) and the fluid (9) in the flow system (1).

5. The insertion device according to any one of the preceding claims, wherein the push-in window assembly (10, 11) includes a pressure relief opening (24).

6. A method for establishing optical accessibility to a flow system (1) for the purpose of measuring the flow velocity, the flow rate and the flow velocity field of fluids in the flow system by means of optical measurement methods, wherein the flow system has an internal wall facing the flowing fluid (9), wherein in the method
- a tube (7) is installed in fluid-tight manner at a location of the flow system (1) that is to be inspected for technical flow characteristics,
- at least one shut-off valve (6) is mounted in fluid-tight manner on the tube (7),
- the wall of the flow system (1) is drilled out inside the tube (7) under pressure, so that a drillhole is created inside the tube (7),
- the shut-off valve (6) is closed before the drilling device is fully withdrawn,
- the insertion device of claim 1 is inserted into an insertion tube (19) that is mounted in fluid-tight manner on the shut-off valve (6),
- the shut-off valve (6) in the open state is inserted by means of a push-in device (13) into the drilled wall, wherein the push-in device (13) is locked detachably to the push-in window assembly (10, 11) by the second bayonet fastening (12),
- the push-in window assembly (10, 11) is locked detachably inside the tube (7) by the first bayonet fastening (8), wherein the side of the push-in window (10) facing towards the flow and the push-in window sleeve (11) of the push-in window assembly (10, 11) lies flush against the inner wall of the flow system (1) without forming a ridge affecting the flow or the flow boundary layer and with only a small gap between the drillhole in the wall and the push-in window sleeve (11),
- the lock between the push-in window assembly (10, 11) and the push-in device (13) is released, wherein the push-in window (10) remains locked together with the push-in window sleeve (11) inside the tube (7),
- the push-in device (13) is withdrawn into the insertion tube (19) and the shut-off valve (6) is closed to prevent the fluid from escaping from the flow system (1),
- the insertion tube (19) is detached from the shut-off valve (6) if necessary to shorten the measuring arrangement,
- an inspection glass (5) is mounted in fluid-tight manner on the side of the shut-off valve (6) facing away from the flow system (1), and the shut-off valve (6) is vented with a venting device (22) after the shut-off valve (6) is opened, so that optical flow measurements of the fluid (9) in the flow system (1) can be made through the inspection glass (5), the open shut-off valve (6) and the push-in window (10).

7. The method according to claim 6, ***characterised in that*** the optical flow measurements of the fluid (9) in the flow system (1) are performed by means of a laser doppler velocimeter (LDV) (4), wherein the flow cross-section in a pipeline of the of the flow system (1) is scanned sequentially through the push-in window (10), the open shut-off valve (6) and the inspection glass (5) by successively shifting LDV problem by means of a traversing device, thereby obtaining a flow profile.

8. The method according to either of claims 6 or 7, ***characterised in that*** the optical flow measurements of the fluid (9) in the flow system (1) are performed by means of a particle image velocimetry (PIV) method.

9. The method according to any one of claims 6 to 8, ***characterised in that*** a magnetic-inductive flowmeter (MID) (3) or an ultrasonic flowmeter is calibrated by the optical measuring method.

10. The method according to any one of claims 6 to 9, ***characterised in that*** the flow velocity, turbulence, swirl and flow distribution are determined by the optical flow measurements at the measurement site in the flow system (1).

11. A flow system comprising
- a wall delimiting the flowing fluid (9), which wall has an inner wall facing towards the flowing fluid (9),
- at least one tube (7) installed in fluid-tight manner on the wall, wherein the wall has a drillhole in the shape of a circle segment inside the installed tube (7),
- at least one shut-off valve (6) which is mounted in fluid-tight manner on the tube (7) and includes at least one venting device,
- at least one insertion device according to claim 1, wherein the push-in window assembly (10, 11) of the insertion device is detachably locked inside the tube (7) by means of the first bayonet fastener (8),
- wherein the side of the push-in window (10) and of the push-in window sleeve (11) of the push-in window assembly (10, 11) facing the flow corresponds to the shape of a circle segment, and the side of the push-in window (10) and of the push-in window sleeve (11) facing the flow is flush with the inner wall, without forming a ridge affecting the flow or the flow boundary layer and with only a small gap between the drillhole in the wall and the push-in window sleeve (11),
- at least one insertion tube (19) for advancing and withdrawing a push-in device (13), wherein the insertion tube (19) is mounted in fluid-tight manner on the shut-off valve (6) on the side of the shut-off valve (6) facing away from the flow system (1).

12. The flow system according to claim 11, ***characterised in that*** the tube (7) in fluid-tight manner is constructed in the form of a weld-on tube (7) welded in fluid-tight manner to the wall in the measuring area, i.e., in the drilling area (18).

13. The flow system according to claim 12, ***characterised in that*** at least one further optically transparent window if arranged in the wall of the weld-on tube (7) welded in fluid-tight manner to the flow system (1), which further window also enables flow measurements and/or calibration measurements at an angle through at least one of said windows and through the push-in window assembly (10, 11) in the fluid (9) of the flow system (1).

14. The flow system according to any of claims 11 to 13, ***characterised in that*** the shut-off valve (6) is structurally integrated in the installed tube (7).

## Revendications

1. Dispositif d'insertion pour l'établissement de l'accessibilité optique à une installation de circulation (1) pour la mesure de la vitesse du flux, du débit et de la plage de vitesses du flux de fluides (9) dans l'installation de circulation au moyen d'un procédé de mesure optique, comprenant
- un agencement à fenêtre coulissante (10, 11), composé d'une fenêtre coulissante (10) dans un manchon de fenêtre coulissante (11),
- l'agencement à fenêtre coulissante (10, 11) comportant des moyens pour un premier emboîtement à baïonnette (8) pour le blocage mobile de l'agencement à fenêtre coulissante (10, 11) dans un tuyau (7) installé dans l'installation de circulation (1),
- l'agencement de fenêtre coulissante (10, 11) comportant des moyens pour une deuxième emboîtement à baïonnette (12) pour le blocage mobile de l'agencement à fenêtre coulissante (10, 11) sur un dispositif coulissant (13) qui est adapté pour introduire et sortir l'agencement à fenêtre coulissante (10, 11) dans le tuyau (7) installé sur l'installation de circulation (1).

2. Dispositif d'insertion selon la revendication 1 avec un dispositif coulissant (13) qui comporte des moyens pour le deuxième emboîtement à baïonnette (12) pour le blocage mobile de l'agencement à fenêtre coulissante (10, 11) sur le dispositif coulissant (13).

3. Dispositif d'insertion selon la revendication 2, le dispositif coulissant (13) étant constitué comme un tuyau coulissant (13) qui comporte un joint d'étanchéité à cordon rond (15) pour étanchéifier vis-à-vis du fluide (9) dans l'installation de circulation (1).

4. Dispositif d'insertion selon l'une quelconque des revendications précédentes, l'agencement à fenêtre coulissante (10, 11) comportant une étanchéification appropriée dans l'installation de circulation (1) pour l'étanchéification de façon étanche au fluide l'agencement à fenêtre coulissante (10, 11) vis-à-vis du tuyau (7) installé dans l'installation de criculation (1), ou du fluide (9).

5. Dispositif d'insertion selon l'une quelconque des revendications précédentes, l'agencement à fenêtre coulissante (10, 11) comportant une ouverture de décompression (24).

6. Procédé pour établir l'accessibilité optique à une installation de circulation (1) pour la mesure de la vitesse du flux du débit et de la plage de vitesse d'écoulement de fluides dans l'installation de circulation au moyen de procédés de mesure optiques, l'installation de circulation comportant une paroi intérieure tournée vers le fluide s'écoulant (9), procédé pour lequel,
- un tuyau (7) est installé étanche au fluide à un emplacement à contrôler selon la technique de mesure des fluides de l'installation de circulation (1),
- au moins un robinet d'arrêt (6) est monté étanche au fluide sur le tuyau (7),
- la paroi de l'installation de circulation (1) est percée à l'intérieur du tuyau (7) par un procédé de perçage par piquage sur conduite en charge sous pression, un trou étant créé de ce fait à l'intérieur du tuyau (7),
- le robinet d'arrêt (6) est fermé avant l'enlèvement complet du dispositif de perçage,
- le dispositif d'insertion selon la revendication 1 est glissé dans un tuyau emboîtable (19) monté étanche au fluide sur le robinet d'arrêt (6),
- le robinet d'arrêt (6) est ouvert et le dispositif d'insertion est glissé dans la paroi percée au moyen d'un dispositif coulissant (13), le dispositif coulissant (13) étant bloqué de manière mobile par la deuxième emboîtement à baïonnette (12) sur l'agencement à fenêtre coulissante (10,11),
- l'agencement à fenêtre coulissante (10, 11) est bloqué de manière mobile dans le tuyau (7) par le premier emboîtement à baïonnette (8), le côté tourné vers l'écoulement de la fenêtre coulissante (10) et du manchon de fenêtre coulissante (11) de l'agencement à fenêtre coulissante (10, 11) s'introduisant de manière affleurante à la paroi intérieure de l'installation de circulation (1) sans former un gradin influençant le flux ou la couche limite de flux et seulement avec un faible interstice entre le trou dans la paroi et le manchon de fenêtre coulissante (11),
- le blocage entre l'agencement à fenêtre coulissante (10, 11) et le dispositif coulissant (13) est débloqué, la fenêtre coulissante (10) restant bloquée dans le tuyau (7) avec le manchon de fenêtre coulissante (11),
- le dispositif coulissant (13) est reculé dans le tuyau emboîtable (19) et le robinet d'arrêt (6) est fermé afin d'éviter une sortie du fluide (9) de l'installation de circulation (1),
- le tuyau emboîtable (19) est démonté du robinet d'arrêt (6) en cas de nécessité pour raccourcir l'agencement de mesure,
- un regard (5) sur le côté du robinet d'arrêt (6), opposé à l'installation de circulation (1), est monté étanche au flux et le robinet d'arrêt (6) est purgé après ouverture du robinet d'arrêt (6) avec un système de purge (22) de sorte que des mesures de flux optiques du fluide (9) sont possibles dans l'installation de circulation (1) à travers le regard (5), le robinet d'arrêt ouvert (6) et la fenêtre coulissante (10).

7. Dispositif d'insertion selon la revendication 6, ***caractérisé en ce que*** les mesures de flux optiques du fluide (9) ont lieu dans l'installation de circulation (1) au moyen d'un vélocimètre laser à effet Doppler (VLD) (4), la section de flux dans une conduite tubulaire de l'installation de circulation (1) étant palpée à travers la fenêtre coulissante (10), le robinet d'arrêt (6) ouvert et le regard (5) l'un après l'autre par déplacement successif d'une sonde VLD au moyen d'un dispositif de traversée et un profil du flux étant ainsi déterminé.

8. Procédé selon l'une quelconque des revendications 6 ou 7, ***caractérisé en ce que*** les mesures de flux optiques du fluide (9) ont lieu dans l'installation de circulation (1) au moyen d'un procédé de vélocimétrie par imagerie des particules (VIP).

9. Dispositif d'insertion selon l'une quelconque des revendications 6 à 8, ***caractérisé en ce qu***'un appareil de mesure de débit magnéto-inductif (MDMI) (3) ou un appareil de mesure de débit à ultrasons est étalonné par le procédé de mesure optique.

10. Dispositif d'insertion selon l'une quelconque des revendications 6 à 9, ***caractérisé en ce qu***'au moyen des mesures de flux optiques dans l'installation de circulation (1) au point de mesure, on détermine la vitesse du flux, la formation de tourbillon, la giration et la répartition du flux dans la direction axiale et périphérique.

11. Installation de circulation comprenant
- une paroi limitant le fluide s'écoulant (9), qui comporte une paroi intérieure tournée vers le fluide s'écoulant (9),
- au moins un tuyau (7) installé étanche au fluide sur la paroi, la paroi comportant à l'intérieur du tuyau installé (7) un trou ayant la forme d'un segment circulaire,
- au moins un robinet d'arrêt (6), qui est monté étanche au fluide sur le tuyau (7) et comporte au moins un système de purge,
- au moins un dispositif d'insertion selon la revendication 1, l'agencement à fenêtre coulissante (10, 11) du dispositif d'insertion étant bloqué dans le tuyau (7) de manière mobile par le premier emboîtement à baïonnette (8),
- le côté tourné vers le flux de la fenêtre coulissante (10) et du manchon de fenêtre coulissante (11) de l'agencement à fenêtre coulissante (10, 11) correspondant à la forme du segment circulaire et le côté tourné vers le flux de la fenêtre coulissante (10) et du manchon de fenêtre coulissante (11) s'introduisant de manière affleurante à la paroi intérieure sans former un gradin influençant le flux ou la couche limite du flux et seulement avec un faible interstice entre le trou dans la paroi et le manchon de fenêtre coulissante (11),
- au moins un tuyau emboîtable (19) pour enfiler et retirer un dispositif d'insertion (13), le tuyau emboîtable (19) sur le robinet d'arrêt (6) étant monté étanche au fluide sur le côté du robinet d'arrêt (6), tourné vers l'installation de circulation (1).

12. Installation de circulation selon la revendication 11, ***caractérisée en ce que*** le tuyau (7) installé de façon étanche au fluide sur la paroi est exécuté comme tuyau à souder (7) soudé étanche au fluide sur la paroi dans la zone de mesure, c'est-à-dire dans la zone de perçage (18).

13. Dispositif d'insertion selon la revendication 12, ***caractérisé en ce qu***'au moins une fenêtre optiquement transparente supplémentaire est disposée dans la paroi du tuyau à souder (7) soudé étanche au fluide sur l'installation de circulation (1), qui permet également des mesures du flux ou des mesures d'étalonnage en diagonale à travers au moins une de ces fenêtres ainsi qu'à travers l'agencement de fenêtre coulissante (10, 11) dans le fluide (9) de l'installation de circulation (1).

14. Installation de circulation selon l'une quelconque des revendications 11 à 13 , ***caractérisée en ce que*** le robinet d'arrêt (6) est intégré dans le tuyau installé (7)lors de la conception.
